# EUROPÄISCHE PATENTSCHRIFT

(11) **EP 4 146 459 B1**
(45) Veröffentlichungstag und Bekanntmachung des Hinweises auf die Patenterteilung: **11.11.2026**
(21) Anmeldenummer: 21725100.8
(22) Anmeldetag: 07.05.2021
(51) Int. Cl.: B29C 70/52, B29C 45/14, B29C 64/118, B33Y 10/00, B32B 7/14, B62D 29/00, B29C 45/16, B29C 61/06, B62D 25/00, B62D 27/02

(54) **VERFAHREN ZUR HERSTELLUNG EINES VERSTÄRKUNGSELEMENTES**
METHOD FOR PRODUCING A REINFORCEMENT ELEMENT
PROCÉDÉ DE FABRICATION D'UN ÉLÉMENT DE RENFORT

(30) Priorität: 08.05.2020 EP 20173729
(43) Veröffentlichungstag der Anmeldung: 15.03.2023
(73) Patentinhaber: Sika Technology AG, 6340 Baar (CH)
(72) Erfinder: MEIER, Michael, 5443 Niederrohrdorf (CH); BENOUALI, Hakim, 1170 Watermael-Boitsfort (BE); SOUVAY, Denis, 67400 Illkirch (FR); ZINGRAFF, Loic, 8057 Zürich (CH)
(74) Vertreter: Sika Patent Attorneys
(86) Internationale Anmeldenummer: PCT/EP2021/062187
(87) Internationale Veröffentlichungsnummer: WO 2021/224470

(56) Entgegenhaltungen:
- EP-A1- 3 466 800
- US-A1- 2019 126 571
- N N: "High Performance toughening agent for SikaPower Epoxy adhesives", 1 February 2018 (2018-02-01), pages 1 - 4, XP093364694, Retrieved from the Internet <URL:https://industry.sika.com/dam/dms/global-industry/p/high-performancetougheningagentforsikapowerepoxyadhesives.pdf#page=2.00>

## Beschreibung

### (Reinversion)

Die Erfindung betrifft ein Verfahren zur Herstellung eines Verstärkungselementes zur Verstärkung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzung, die zur Korrosion der Bauelemente führen können, abgedichtet werden. Oft ist es auch wünschenswert, solche Hohlräume und somit das Bauelement wesentlich zu verstärken, jedoch das geringe Gewicht beizubehalten. Weiterhin ist es in manchen Fällen auch notwendig, die Hohlräume und somit die Bauelemente zu stabilisieren, um Geräusche, die sonst den Hohlräumen entlang oder durch diese hindurch übertragen werden würden, zu reduzieren.

Insbesondere im Automobilbau, aber auch im Flugzeug- und Bootsbau, werden deshalb unter anderem Verstärkungselemente (englisch: reinforcer) verwendet, um Hohlräume zu verstärken. Ein bekannter Ansatz zur Herstellung solcher Verstärkungselemente besteht darin, dass in einem Zweikomponentenspritzgussverfahren ein Träger gespritzt wird, und dass auf einer Aussenseite dieses Trägers ein expandierbarer Klebstoff als zweite Komponente angespritzt wird. Solche Verstärkungselemente werden in Hohlräume von Strukturelementen eingesetzt, wo dann der Klebstoff unter Hitzeeinwirkung expandiert und dadurch das Trägerelement mit dem Strukturelement verklebt.

Aus US 2019/126571 A1 ist ein Verfahren zur Herstellung einer beschichteten Vorrichtung bekannt, wobei das Beschickungsmaterial mit einem Polymerharz überzogen wird und anschliessend durch eine Pultrusionsdüse gezogen wird. Das derart hergestellte Substrat wird anschliessend beschichtet.

Nachteilig an solchen und ähnlichen bekannten Verstärkungselementen bzw. Verfahren zur Herstellung von Verstärkungselementen ist es, dass das Material des Trägers ein limitierendes Element im Gesamtsystem hinsichtlich der mechanischen Stabilität sein kann. Durch das vorgenannte Spritzgussverfahren ist jedoch die Materialauswahl hinsichtlich des Trägermaterials beschränkt, so dass hier nicht beliebig optimiert werden kann hinsichtlich einer mechanischen Stabilität. Gerade in Bereichen von crashrelevanten Strukturen ist jedoch die mechanische Stabilität des Systems von grosser Bedeutung, da für solche Anwendungen eine höchstmögliche mechanische Stabilität wünschenswert ist.

Der Erfindung liegt daher die Aufgabe zugrunde, ein verbessertes Verfahren zur Herstellung eines Verstärkungselementes zur Verfügung zu stellen, welches insbesondere Verstärkungselemente mit einer verbesserten mechanischen Stabilität hervorzubringen vermag. Zudem soll das erfindungsgemässe Verfahren zur Herstellung eines Verstärkungselementes eine effiziente und kostenoptimierte Produktion von Verstärkungselementen ermöglichen.

Diese Aufgabe wird gelöst durch ein Verfahren zur Herstellung eines Verstärkungselementes zur Verstärkung eines Strukturelementes in einem Kraftfahrzeug, gemäss Anspruch 1.

Diese Lösung hat zunächst den Vorteil, dass durch das Pultrudieren des Trägerelementes Trägerelemente mit einer verbesserten mechanischen Stabilität hergestellt werden können. Durch den Einsatz von Endlosfasern in Richtung der Längsachse des Trägerelementes können wesentlich stabilere Trägerelemente realisiert werden.

Ein weiterer Vorteil ist darin zu sehen, dass durch ein Pultrusionsverfahren im Unterschied zu einem Spritzgussverfahren weniger Investitionskosten in Werkzeuge getätigt werden müssen. So kann beispielsweise eine Produktionsanlage zur Herstellung von Trägerelementen mit verschiedenen Querschnitten genutzt werden, indem lediglich ein Formgebungselement bei der Pultrusion angepasst werden muss. Demgegenüber muss bei dem Spritzgussverfahren jeweils eine neue Spritzgussform für jedes andersartige Trägerelement hergestellt werden, was hohe Investitionskosten zur Folge hat.

Die hier vorgeschlagene Lösung hat zudem den Vorteil, dass dadurch die gesamte Herstellung des Verstärkungselementes in einer ununterbrochenen Produktionslinie gemacht werden kann. Dies führt zu einer Vereinfachung des gesamten Prozesses. Im Idealfall sind keine weiteren Nachbearbeitungsschritte der abgelängten Verstärkungselemente mehr nötig.

In einer beispielhaften Ausführungsform werden beim Pultrudieren des Trägerelementes Endlosfasern verwendet.

In einer beispielhaften Ausführungsform werden Glas- und/oder Karbon- und/oder Aramid- und/oder Naturfasern verwendet.

In einer weiteren beispielhaften Ausführungsform wird als Matrix, welche um die Fasern angeordnet ist, beim Pultrudieren des Trägerelementes eine Polyamid-Zusammensetzung verwendet.

In einer bevorzugten Weiterbildung wird ein Polyamid 6 verwendet.

In einer weiteren beispielhaften Weiterbildung wird ein in-situ polymerisiertes Polyamid verwendet.

In einem ersten alternativen Ausführungsbeispiel wird der Klebstoff auf dem Trägerelement angeordnet, bevor das pultrudierte Trägerelement abgelängt wird.

Dies hat den Vorteil, dass dadurch eine kompakte und kostenoptimierte Produktionslinie realisiert werden kann.

In einem zweiten alternativen Ausführungsbeispiel wird das pultrudierte Trägerelement abgelängt, bevor der Klebstoff auf einer Aussenseite des Trägerelementes angeordnet wird.

Eine solche Reihenfolge im Herstellungsverfahren hat den Vorteil, dass dadurch eine grössere Gestaltungsfreiheit in den weiteren Prozessen ermöglicht wird. Beispielsweise können die abgelängten Trägerelemente in allen Dimensionen bearbeitet werden, was hingegen in einem Prozess mit einer durchgehenden Produktionslinie nur schwer realisierbar ist.

Als Klebstoff können grundsätzlich verschiedene Klebstoffe eingesetzt werden.

Erfindungsgemäss ist der Klebstoff ein Formgedächtnismaterial.

Solche Formgedächtnismaterialien sind beispielsweise in der Veröffentlichung WO 2019/145503 A1 beschrieben.

In einer beispielhaften Weiterbildung umfasst das Verfahren den weiteren Schritt: Pressen des Klebstoffes zur Überführung des Klebstoffes in einen gespannten Zustand.

In einer beispielhaften Weiterbildung wird der Klebstoff durch eine Rolle gepresst.

In einer weiteren beispielhaften Weiterbildung wird der Klebstoff auf dem Trägerelement angeordnet, bevor das Trägerelement abgelängt wird.

In einer weiteren beispielhaften Weiterbildung wird der Klebstoff gepresst, bevor das Trägerelement abgelängt wird.

Das Verwenden eines Formgedächtnismaterials als Klebstoff hat den Vorteil, dass dadurch eine Anordnung und eine Vorbereitung des Klebstoffes in einer durchgehenden Produktionslinie realisiert werden kann. So kann beispielsweise der auf das Trägerelement aufgebrachte Klebstoff durch eine Pressstation geführt werden, in welcher Rollen den Klebstoff in einen gespannten Zustand überführen.

In einer alternativen Ausführungsform ist der Klebstoff ein nicht-expandierbarer Klebstoff.

In einer beispielhaften Weiterbildung expandiert dieser nicht-expandierbare Klebstoff bei einer Aktivierung um weniger als ± 20%, bevorzugt um weniger als ± 10%, besonders bevorzugt weniger als ± 5%.

In einer weiteren beispielhaften Ausführungsform ist der Klebstoff ein expandierbarer Klebstoff.

In einer beispielhaften Weiterbildung hat der expandierbare Klebstoff eine Expansionsrate zwischen 50 und 800%, bevorzugt zwischen 50 und 500%, besonders bevorzugt zwischen 100 und 400%.

In einer weiteren beispielhaften Ausführungsform ist der Klebstoff ein nicht expandierbarer Klebstoff, wobei zusätzlich ein expandierbares Material unter dem Klebstoff angeordnet ist.

In einer bevorzugten Weiterbildung wird zunächst das expandierbare Material auf der zumindest einen Aussenfläche des Trägerelementes angeordnet, und danach wird der nicht expandierbare Klebstoff auf dem expandierbaren Material angeordnet. Demnach ist schliesslich das expandierbare Material zwischen dem Trägerelement und dem nicht expandierbaren Klebstoff angeordnet.

Durch eine solche Anordnung kann der nicht expandierbare Klebstoff durch das expandierbare Material bei dessen Aktivierung an das Strukturelement gepresst werden, so dass eine Verbindung zwischen Strukturelement und Trägerelement hergestellt werden kann.

Als expandierbares Material kann beispielsweise ein Material, welches unter dem Handelsnamen SikaBaffle^{®} erhältlich ist, verwendet werden.

In einer beispielhaften Ausführungsform umfasst das Verfahren den weiteren Schritt: Extrudieren oder Überspritzen eines Zusatzelementes auf das Trägerelement.

Das Vorsehen eines solchen Schrittes bietet den Vorteil, dass dadurch eine Gestaltungsmöglichkeit des Verstärkungselementes zur Verfügung gestellt wird, welche unabhängig ist von der Produktionsrichtung des Pultrusionsverfahrens. Beispielsweise kann also ein Zusatzelement hinzugefügt werden, welches nicht entlang der Längsachse des Trägerelementes verläuft.

In einer beispielhaften Weiterbildung hat das Trägerelement ein anderes Material als das Zusatzelement.

In einer beispielhaften Weiterbildung hat das Zusatzelement keine Fasern, wobei das Trägerelement Fasern in Längsrichtung des Trägerelementes umfasst.

In einer beispielhaften Weiterbildung wird das Zusatzelement durch eine in eine Produktionslinie integrierte Düse auf das Trägerelement extrudiert oder überspritzt, bevor das pultrudierte Trägerelement abgelängt wird.

In einer alternativen Weiterbildung wird das Zusatzelement durch einen Roboter auf das Trägerelement extrudiert oder überspritzt, nachdem das pultrudierte Trägerelement abgelängt wird.

In einer beispielhaften Ausführungsform ist das Zusatzelement als Rippe und/oder als Rippen ausgebildet, welche sich im Wesentlichen quer zur Längsachse des Trägerelementes erstreckt, und welche eine Verwindungssteifigkeit und/oder Biegesteifigkeit des Trägerelementes erhöht.

In einer beispielhaften Ausführungsform ist das Zusatzelement als eine Wand auf zumindest einer Aussenfläche des Trägerelementes angeordnet.

In einer bevorzugten Weiterbildung begrenzt diese zumindest eine Wand den Klebstoff in zumindest eine Richtung auf der Aussenfläche des Trägerelementes.

Das Vorsehen von einer solchen Wand bzw. von solchen Wänden bietet den Vorteil, dass dadurch der Klebstoff mechanisch geschützt wird, bevor er im Strukturelement angeordnet wird. Beispielsweise wird so die Gefahr verringert, dass der Klebstoff vom Trägerelement abgestreift oder abgeschlagen wird. Weiterhin haben solche Wände den Vorteil, dass bei einer Aktivierung des Klebstoffes der Klebstoff bei einer Expansion geführt werden kann durch die Wand, oder aber dass er bei nicht expandierbaren Klebstoffen in Form gehalten wird.

In einer beispielhaften Ausführungsform ist das Zusatzelement als zumindest ein Distanzhalter ausgebildet.

In einer beispielhaften Weiterbildung ist dieser zumindest eine Distanzhalter in einem Verwendungszustand des Verstärkungselementes mit dem Strukturelement in Berührung und definiert so eine Position des Verstärkungselementes relativ zum Strukturelement in zumindest eine Richtung.

In einer beispielhaften Ausführungsform ist das Zusatzelement als ein expandierbares Element ausgebildet.

In einer beispielhaften Weiterbildung wirkt das expandierbare Element als Abdichtung in seinem expandiertem Zustand.

In einer beispielhaften Ausführungsform wird das Zusatzelement in mehreren Verfahrensschritten und/oder durch mehrere Düsen auf das Trägerelement extrudiert oder überspritzt.

Eine solche Herstellung in mehreren Verfahrensschritten hat den Vorteil, dass dadurch eine grössere Freiheit in Bezug auf Materialien und Formen gewährleistet werden kann.

In einer beispielhaften Ausführungsform umfasst das Zusatzelement Polyamid.

In einer beispielhaften Ausführungsform wird das Zusatzelement rund um das Trägerelement herum extrudiert oder überspritzt, so dass das Zusatzelement im Wesentlichen quer zur Längsachse des Trägerelementes ausgerichtet ist.

In einer beispielhaften Ausführungsform umfasst das Verfahren den zusätzlichen Schritt: Extrudieren oder Überspritzen eines zweiten Zusatzelementes auf das Trägerelement und/oder auf das erste Zusatzelement.

In einer beispielhaften Weiterbildung hat das erste Zusatzelement ein anderes Material als das zweite Zusatzelement.

In einer weiteren beispielhaften Weiterbildung hat das erste Zusatzelement eine andere Biegefestigkeit und/oder eine andere Bruchlast als das zweite Zusatzelement.

In einer beispielhaften Ausführungsform umfasst das Verfahren den weiteren Schritt: Biegen des pultrudierten Trägerelementes.

Das Biegen kann dabei vor oder nach dem Ablängen erfolgen.

Einzelheiten und Vorteile der Erfindung werden im Folgenden anhand von Ausführungsbeispielen und mit Bezug auf schematische Zeichnungen beschrieben. Es zeigen:
- Fig. 1A: eine beispielhafte Darstellung eines Pultrusionsverfahrens;
- Fig. 1B: eine beispielhafte Darstellung weiterer Stationen in einer Pultrusionsproduktionslinie;
- Fig. 1C: eine beispielhafte Darstellung nachgelagerter Stationen;
- Fig. 2: eine beispielhafte Darstellung eines Verstärkungselementes in räumlicher Darstellung;
- Fig. 3A bis 3C: beispielhafte Darstellungen von Querschnitten von Verstärkungselementen; und
- Fig. 4 und 5: beispielhafte Darstellungen von Verstärkungselementen in räumlicher Darstellung.

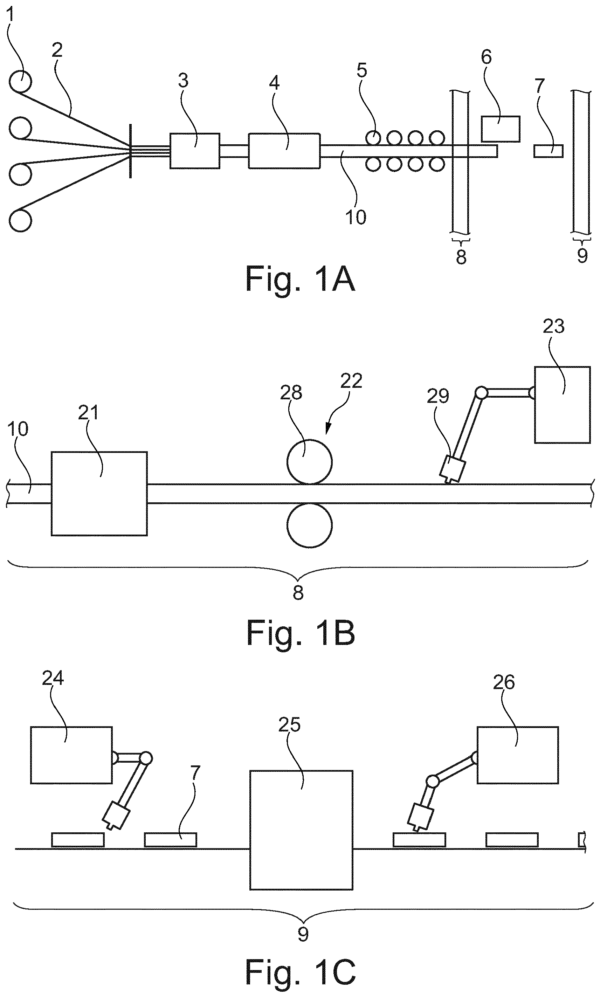

In den Fig. 1A bis 1C ist ein beispielhaftes Verfahren zur Herstellung eines Verstärkungselementes dargestellt. Dabei zeigt die Fig. 1A eine Übersicht über ein solches Verfahren, und die Fig. 1B und 1C zeigen weitere Einzelheiten von Abschnitten in diesem Herstellungsverfahren. Dabei ist in Fig. 1B ein Abschnitt innerhalb der Produktionslinie mit weiteren Stationen schematisch dargestellt, und in Fig. 1C sind nachgelagerte Stationen dargestellt, welche nicht in der primären Produktionslinie des Pultrusionsverfahrens stattfinden.

Gemäss Fig. 1A werden beim Pultrudieren Fasern 2 von Faserspindeln 1 zunächst durch eine Harzwanne 3 geführt. In einem Härtungswerkzeug 4 wird das Profil 10 geformt und gehärtet. Durch ein Ziehwerkzeug 5 wird sichergestellt, dass die Fasern 2 während diesen Prozessschritten geordnet unter Zug stehen. Durch diese Schritte wird demnach ein Profil 10 hergestellt, welches als Ausgangspunkt für das Trägerelement dient. Eine Ablängungsstation 6 unterteilt schliesslich das endlos produzierte Profil 10 in abgelängte Elemente 7.

In der Fig. 1B sind Stationen innerhalb der Produktionslinie schematisch dargestellt, welche im Abschnitt 8 in der Übersicht gemäss Fig. 1A angeordnet sind. Im Ausführungsbeispiel ist zunächst eine Klebstoffapplikationsstation 21 dargestellt. An dieser Station wird ein Klebstoff auf das pultrudierte Profil 10 angeordnet. In diesem Ausführungsbeispiel wird ein Formgedächtnismaterial als Klebstoff verwendet. Weiterhin wird der Klebstoff an einer Pressstation 22 durch Rollen 28 gepresst und in einen gespannten Zustand überführt. Zudem gibt es in diesem Ausführungsbeispiel eine Extrusionsstation 23, von welcher mithilfe einer Düse 29 ein Zusatzelement auf das Profil 10 bzw. das Trägerelement extrudiert werden kann.

In der Fig. 1C sind nachgelagerte Stationen schematisch dargestellt, welche im Abschnitt 9 in der Übersichtsdarstellung gemäss Fig. 1A angeordnet sind. In diesem Ausführungsbeispiel hat es eine erste nachgelagerte Station 24, eine zweite nachgelagerte Station 25 und eine dritte nachgelagerte Station 26. Gemeinsam an diesen nachgelagerten Stationen 24, 25, 26 ist es, dass dabei jeweils immer ein Verfahrensschritt an einem abgelängten Element 7 des pultrudierten Profils 10 ausgeführt wird. Beispielsweise kann an der ersten nachgelagerten Station 24 ein erstes Zusatzelement auf das Trägerelement extrudiert oder überspritzt werden. In der zweiten nachgelagerten Station 25 kann beispielsweise der Klebstoff auf zumindest einer Aussenfläche des Trägerelementes angeordnet werden. Und in der dritten nachgelagerten Station 26 kann beispielsweise ein zweites Zusatzelement auf das Trägerelement und/oder auf das erste Zusatzelement extrudiert oder überspritzt werden.

Um aus dem pultrudierten Profil 10 ein Verstärkungselement herzustellen, kann beispielsweise nur mit Stationen in der Produktionslinie gearbeitet werden, oder aber es kann auch nur mit nachgelagerten Stationen gearbeitet werden, oder aber es kann sowohl mit Stationen in der Produktionslinie als auch mit nachgelagerten Stationen gearbeitet werden.

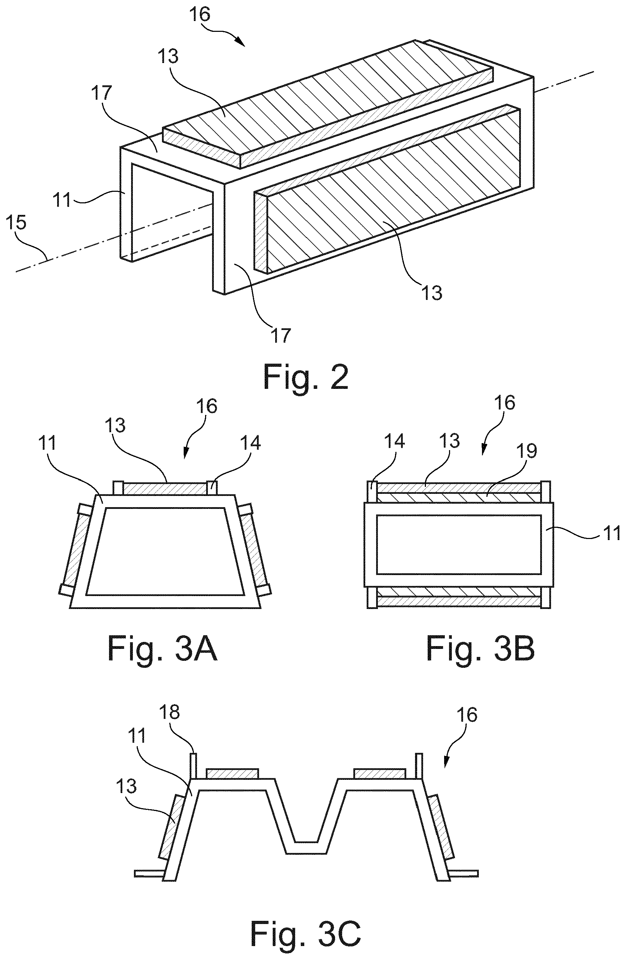

In den Fig. 2 bis 5 sind sodann beispielhaft und schematisch Verstärkungselemente 16 dargestellt, welche durch ein Verfahren gemäss den Fig. 1A bis 1C hergestellt werden können.

In Fig. 2 ist ein Verstärkungselement 16 schematisch und beispielhaft dargestellt. Das Verstärkungselement 16 hat ein Trägerelement 11, welches eine Längsachse 15 hat. Das Trägerelement 11 hat mehrere sich in Richtung der Längsachse 15 sich erstreckende Aussenflächen 17. Auf diesen Aussenflächen 17 ist ein Klebstoff 13 angeordnet. In dieser beispielhaften Ausführungsform hat das Verstärkungselement 16 keine weiteren Zusatzelemente wie Rippen oder Wände oder Distanzelemente.

In den Fig. 3A bis 3C sind Querschnitte durch beispielhafte Verstärkungselemente 16 schematisch dargestellt.

In Fig. 3A ist ein Verstärkungselement 16 mit einem trapezoiden Querschnitt dargestellt. Das Trägerelement 11 hat auf drei Aussenflächen jeweils einen Klebstoff 13 angeordnet, welcher von Wänden 14 seitlich abgeschlossen ist. Solche Wände 14 sind deshalb vorteilhaft, weil sie einerseits den Klebstoff 13 vor mechanischen Einflüssen schützen, und andererseits eine Expansion des Klebstoffes 13 oder eine Formstabilität des Klebstoffes 13 bei einer Aktivierung des Klebstoffes 13 gewährleisten können.

In Fig. 3B ist ein weiterer Querschnitt eines weiteren beispielhaften Verstärkungselementes 16 schematisch dargestellt. In diesem Ausführungsbeispiel hat der Träger 11 einen rechteckigen Querschnitt. Auf den beiden breiteren Aussenflächen 17 des Trägerelements 11 ist in diesem Ausführungsbeispiel ein expandierbares Material 19 und ein darauf angeordneter Klebstoff 13 angeordnet. Das expandierbare Material 19 und der Klebstoff 13 sind dabei wiederum von Wänden 14 seitlich abgeschlossen. Bei einer Aktivierung des expandierbaren Materials 19 und des Klebstoffes 13 wird der Klebstoff 13 gegen eine Innenseite des Strukturelementes gedrückt durch die Expansion des expandierbaren Materials 19.

In Fig. 3C ist ein weiterer beispielhafter Querschnitt eines Verstärkungselementes 16 schematisch dargestellt. In diesem Ausführungsbeispiel hat das Trägerelement 11 einen M- bzw. einen W-förmigen Querschnitt. Auf vier Aussenflächen ist jeweils ein Klebstoffelement 13 angeordnet. Zudem hat dieses Verstärkungselement 16 Distanzelemente 18, welche in einem Verwendungszustand des Verstärkungselementes 16 eine Beabstandung des Trägerelementes 11 von dem Strukturelement (nicht dargestellt) definieren.

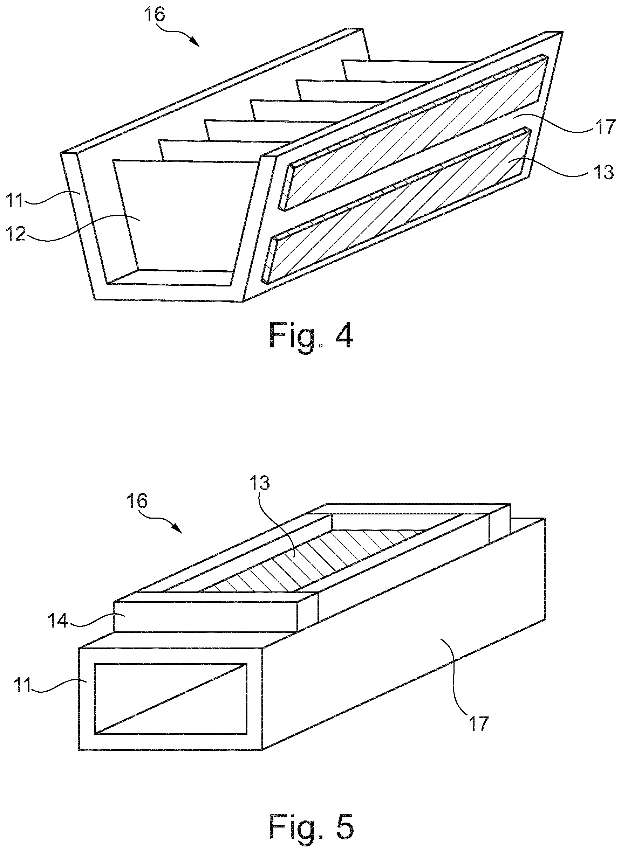

In Fig. 4 ist ein beispielhaftes Verstärkungselement 16 in räumlicher Darstellung schematisch gezeigt. Dabei hat das Trägerelement 11 einen im Wesentlichen U-förmigen Querschnitt, und auf Aussenflächen 17 des Trägerelementes ist Klebstoff 13 angeordnet. In diesem Ausführungsbeispiel hat das Verstärkungselement Zusatzelemente in der Form von Rippen 12, welche quer zur Längsrichtung des Trägerelementes 11 verlaufen. Durch das Vorsehen solcher Rippen 12 wird eine Verwindungssteifigkeit und/oder eine Biegesteifigkeit des Trägerelementes erhöht.

In Fig. 5 ist nun ein Verstärkungselement 16 in einer räumlichen Darstellung schematisch gezeigt. In diesem Ausführungsbeispiel hat das Trägerelement 11 einen rechteckigen Querschnitt. Auf einer Aussenfläche 17 des Trägerelementes 11 ist ein Klebstoff 13 angeordnet. In diesem Ausführungsbeispiel ist der Klebstoff 13 auf allen Seiten durch Wände 14 begrenzt.

### Bezugszeichenliste

- 1: Faserspindel
- 2: Faser
- 3: Harzwanne
- 4: Härtungswerkzeug
- 5: Ziehwerkzeug
- 6: Ablängungsstation
- 7: abgelängtes Element
- 8: Abschnitt mit Stationen in der Produktionslinie
- 9: Abschnitt mit nachgelagerten Stationen
- 10: Endlosprofil
- 11: Trägerelement
- 12: Rippe
- 13: Klebstoff
- 14: Wand
- 15: Längsachse
- 16: Verstärkungselement
- 17: Aussenfläche
- 18: Distanzelement
- 19: expandierbares Material
- 21: Klebstoffapplikationsstation
- 22: Pressstation
- 23: Extrusionsstation
- 24: erste nachgelagerte Station
- 25: zweite nachgelagerte Station
- 26: dritte nachgelagerte Station
- 28: Rolle
- 29: Düse

## Patentansprüche

1. Verfahren zur Herstellung eines Verstärkungselementes (16) zur Verstärkung eines Strukturelementes in einem Kraftfahrzeug, das Verfahren umfassend die Schritte:
Pultrudieren eines Trägerelementes (11), welches eine Längsachse (15) hat, die sich in einem Verwendungszustand entlang einer Längsachse des Strukturelementes erstreckt, wobei das Trägerelement (11) mehrere sich in Richtung der Längsachse (15) erstreckende Aussenflächen (17) hat;
Anordnen eines Klebstoffes (13) auf zumindest einer Aussenfläche (17) des Trägerelementes (11); und
Ablängen des pultrudierten Trägerelementes (11);
**dadurch gekennzeichnet, dass** der Klebstoff (13) ein FormgedächtnisMaterial ist.

2. Verfahren nach Anspruch 1, wobei das Verfahren den weiteren Schritt umfasst:
Pressen des Klebstoffes (13) zur Überführung des Klebstoffes (13) in einen gespannten Zustand;

3. Verfahren nach Anspruch 1 oder 2, wobei der Klebstoff (13) auf dem Trägerelement (11) angeordnet wird, bevor das Trägerelement (11) abgelängt wird, und/oder wobei der Klebstoff (13) gepresst wird, bevor das Trägerelement (11) abgelängt wird.

4. Verfahren nach Anspruch 2 oder 3, wobei der Klebstoff (13) durch eine Rolle gepresst wird.

5. Verfahren nach einem der vorhergehenden Ansprüche, wobei das Verfahren den weiteren Schritt umfasst:
Extrudieren oder Überspritzen eines Zusatzelementes (12, 14, 18) auf das Trägerelement (11).

6. Verfahren nach Anspruch 5, wobei das Zusatzelement (12, 14, 18) durch eine in eine Produktionslinie integrierte Düse (29) auf das Trägerelement (11) extrudiert oder überspritzt wird, bevor das pultrudierte Trägerelement (11) abgelängt wird (Inline-Prozess).

7. Verfahren nach Anspruch 5, wobei das Zusatzelement (12, 14, 18) durch eine nachgelagerte Station (24, 26) auf das Trägerelement (11) extrudiert oder überspritzt wird, nachdem das pultrudierte Trägerelement (11) abgelängt wird.

8. Verfahren nach einem der Ansprüche 5 bis 7, wobei das Zusatzelement (12, 14, 18) als Rippen (12) ausgebildet ist, welche sich im Wesentlichen quer zur Längsachse (15) des Trägerelementes (11) erstrecken, und welche eine Verwindungssteifigkeit und/oder Biegesteifigkeit des Trägerelementes (11) erhöhen.

9. Verfahren nach einem der Ansprüche 5 bis 7, wobei das Zusatzelement (12, 14, 18) als zumindest eine Wand (14) auf zumindest einer Aussenfläche (17) des Trägerelementes (11) ausgebildet ist, wobei die Wand (14) den Klebstoff (13) in zumindest eine Richtung auf der Aussenfläche (17) begrenzt.

10. Verfahren nach einem der Ansprüche 5 bis 7, wobei das Zusatzelement (12, 14, 18) als zumindest ein Distanzelement (18) ausgebildet ist, welches in einem Verwendungszustand des Verstärkungselementes (16) mit dem Strukturelement in Berührung ist und so eine Position des Verstärkungselementes (16) relativ zum Strukturelement in zumindest eine Richtung definiert.

11. Verfahren nach einem der Ansprüche 5 bis 10, wobei das Zusatzelement (12, 14, 18) in mehreren Verfahrensschritten und/oder durch mehrere Düsen (29) auf das Trägerelement (11) extrudiert oder überspritzt wird.

12. Verfahren nach einem der Ansprüche 5 bis 11, wobei das Zusatzelement (12, 14, 18) Polyamid umfasst.

13. Verfahren nach einem der Ansprüche 5 bis 12, wobei das Zusatzelement (12, 14, 18) rund um das Trägerelement (11) herum extrudiert oder überspritzt wird, sodass das Zusatzelement (12, 14, 18) im Wesentlichen quer zur Längsachse (15) des Trägerelementes (11) ausgerichtet ist.

14. Verfahren nach einem der Ansprüche 5 bis 13, wobei das Verfahren den zusätzlichen Schritt umfasst:
Extrudieren oder Überspritzen eines zweiten Zusatzelementes (12, 14, 18) auf das Trägerelement (11) und/oder auf das erste Zusatzelement (12, 14, 18).

## Claims

1. Method for producing a reinforcing element (16) for reinforcing a structural element in a motor vehicle, the method comprising the following steps:
pultruding a carrier element (11), which has a longitudinal axis (15) extending along a longitudinal axis of the structural element in a use state, wherein the carrier element (11) has multiple outer surfaces (17) extending in the direction of the longitudinal axis (15);
arranging an adhesive (13) on at least one outer surface (17) of the carrier element (11); and
cutting the pultruded carrier element (11) to length;
**characterized in that** the adhesive (13) is a shape memory material.

2. Method according to Claim 1, wherein the method comprises the following further step:
pressing the adhesive (13) to transfer the adhesive (13) into a stressed state.

3. Method according to Claim 1 or 2, wherein the adhesive (13) is arranged on the carrier element (11) before the carrier element (11) is cut to length, and/or wherein the adhesive (13) is pressed before the carrier element (11) is cut to length.

4. Method according to Claim 2 or 3, wherein the adhesive (13) is pressed by a roller.

5. Method according to one of the preceding claims, wherein the method comprises the following further step: extruding or overmoulding an additional element (12, 14, 18) onto the carrier element (11).

6. Method according to Claim 5, wherein the additional element (12, 14, 18) is extruded or overmoulded onto the carrier element (11) through a nozzle (29) integrated in a production line, before the pultruded carrier element (11) is cut to length (in-line process).

7. Method according to Claim 5, wherein the additional element (12, 14, 18) is extruded or overmoulded onto the carrier element (11) by a downstream station (24, 26), after the pultruded carrier element (11) is cut to length.

8. Method according to one of Claims 5 to 7, wherein the additional element (12, 14, 18) is in the form of ribs (12), which extend substantially transversely with respect to the longitudinal axis (15) of the carrier element (11) and which increase the torsional rigidity and/or the flexural rigidity of the carrier element (11).

9. Method according to one of Claims 5 to 7, wherein the additional element (12, 14, 18) is in the form of at least one wall (14) on at least one outer surface (17) of the carrier element (11), wherein the wall (14) delimits the adhesive (13) in at least one direction on the outer surface (17).

10. Method according to one of Claims 5 to 7, wherein the additional element (12, 14, 18) is in the form of at least one spacer element (18), which is in contact with the structural element, and thus defines a position of the reinforcing element (16) relative to the structural element in at least one direction, in a use state of the reinforcing element (16).

11. Method according to one of Claims 5 to 10, wherein the additional element (12, 14, 18) is extruded or overmoulded onto the carrier element (11) in multiple method steps and/or through multiple nozzles (29).

12. Method according to one of Claims 5 to 11, wherein the additional element (12, 14, 18) comprises polyamide.

13. Method according to one of Claims 5 to 12, wherein the additional element (12, 14, 18) is extruded or overmoulded around the carrier element (11), with the result that the additional element (12, 14, 18) is aligned substantially transversely with respect to the longitudinal axis (15) of the carrier element (11).

14. Method according to one of Claims 5 to 13, wherein the method comprises the following additional step:
extruding or overmoulding a second additional element (12, 14, 18) onto the carrier element (11) and/or onto the first additional element (12, 14, 18).

## Revendications

1. Procédé de fabrication d'un élément de renforcement (16) destiné à renforcer un élément structurel dans un véhicule automobile, le procédé comprenant les étapes suivantes :
l'extrusion par pultrusion d'un élément de support (11) qui présente un axe longitudinal (15) qui, dans un état d'utilisation, s'étend le long d'un axe longitudinal de l'élément structurel, l'élément de support (11) présentant plusieurs surfaces extérieures (17) s'étendant dans la direction de l'axe longitudinal (15) ;
la disposition d'un adhésif (13) sur au moins une surface extérieure (17) de l'élément de support (11) ; et
la coupe à longueur de l'élément de support pultrudé (11) ;
**caractérisé en ce que** l'adhésif (13) est un matériau à mémoire de forme.

2. Procédé selon la revendication 1, le procédé comprenant l'étape supplémentaire suivante :
le pressage de l'adhésif (13) pour transformer l'adhésif (13) en un état contraint.

3. Procédé selon la revendication 1 ou 2, **caractérisé en ce que** l'adhésif (13) est disposé sur l'élément de support (11) avant la coupe à longueur de l'élément de support (11) et/ou **en ce que** l'adhésif (13) est pressé avant la coupe à longueur de l'élément de support (11).

4. Procédé selon la revendication 2 ou 3, dans lequel l'adhésif (13) est pressé par un rouleau.

5. Procédé selon l'une des revendications précédentes, dans lequel le procédé comprend l'étape supplémentaire suivante :
l'extrusion ou le surmoulage d'un élément supplémentaire (12, 14, 18) sur l'élément de support (11).

6. Procédé selon la revendication 5, dans lequel l'élément supplémentaire (12, 14, 18) est extrudé ou surmoulé sur l'élément de support (11) par l'intermédiaire d'une buse (29) intégrée dans une ligne de production avant que l'élément de support pultrudé (11) ne soit coupé à longueur (procédé en ligne).

7. Procédé selon la revendication 5, dans lequel l'élément supplémentaire (12, 14, 18) est extrudé ou surmoulé sur l'élément de support (11) par un poste aval (24, 26) après la coupe à longueur de l'élément de support (11) pultrudé.

8. Procédé selon l'une des revendications 5 à 7, dans lequel l'élément supplémentaire (12, 14, 18) est réalisé sous forme de nervures (12) qui s'étendent sensiblement transversalement à l'axe longitudinal (15) de l'élément de support (11) et qui augmentent une rigidité en torsion et/ou une rigidité en flexion de l'élément de support (11).

9. Procédé selon l'une des revendications 5 à 7, dans lequel l'élément supplémentaire (12, 14, 18) est réalisé sous la forme d'au moins une paroi (14) sur au moins une surface extérieure (17) de l'élément de support (11), la paroi (14) délimitant l'adhésif (13) dans au moins une direction sur la surface extérieure (17).

10. Procédé selon l'une des revendications 5 à 7, dans lequel l'élément supplémentaire (12, 14, 18) est réalisé sous la forme d'au moins un élément d'écartement (18) qui, dans un état d'utilisation de l'élément de renforcement (16), est en contact avec l'élément structurel et définit ainsi une position de l'élément de renforcement (16) par rapport à l'élément structurel dans au moins une direction.

11. Procédé selon l'une des revendications 5 à 10, dans lequel l'élément supplémentaire (12, 14, 18) est extrudé ou surmoulé sur l'élément de support (11) en plusieurs étapes de procédé et/ou à travers plusieurs buses (29).

12. Procédé selon l'une des revendications 5 à 11, dans lequel l'élément supplémentaire (12, 14, 18) comprend du polyamide.

13. Procédé selon l'une des revendications 5 à 12, dans lequel l'élément supplémentaire (12, 14, 18) est extrudé ou surmoulé autour de l'élément de support (11), de telle sorte que l'élément supplémentaire (12, 14, 18) est orienté sensiblement transversalement à l'axe longitudinal (15) de l'élément de support (11).

14. Procédé selon l'une des revendications 5 à 13, le procédé comprenant l'étape supplémentaire suivante :
l'extrusion ou le surmoulage d'un deuxième élément supplémentaire (12, 14, 18) sur l'élément de support (11) et/ou sur le premier élément supplémentaire (12, 14, 18).
